# EUROPEAN PATENT APPLICATION

(11) **EP 4 711 879 A1**
(43) Date of publication of application: **18.03.2026**
(21) Application number: 23936250.2
(22) Date of filing: 21.06.2023
(51) Int. Cl.: G05D 1/246, G05D 1/227, E04H 4/16

(54) **POOL ROBOT CONTROL METHOD AND APPARATUS, STORAGE MEDIUM AND ELECTRONIC DEVICE**

(30) Priority: 06.05.2023 CN 202310504865
(71) Applicant: Xingmai Innovation Technology (Suzhou) Co., Ltd., Suzhou, Jiangsu 215124 (CN)
(72) Inventor: ZHANG, Shilei, Suzhou, Jiangsu 215124 (CN)
(74) Representative: Huang, Liwei
(86) International application number: PCT/CN2023/101926
(87) International publication number: WO 2024/229941

(57) **Abstract**

A pool robot control method and apparatus, a storage medium, and an electronic device are provided. The control method includes: obtaining a start position from which the pool robot executes a current task, where the start position is an entering-water position or a pool bottom position of the pool robot in a target map at which the pool robot executes the current task, and the target map is a map established by identifying a target pool (S202); and when the pool robot needs to be instructed to return during execution of the current task or after the current task is executed, controlling the pool robot to move to a target stop position in the water of the target pool, where the target stop position is a position on a side wall of the target pool, where the position corresponds to the start position (S204).

## Description

### CROSS-REFERENCE TO RELATED APPLICATIONS

The present disclosure claims priority to Chinese Patent Application No. 2023105048650, filed with the China National Intellectual Property Administration on May 6, 2023 and entitled "POOL ROBOT CONTROL METHOD AND APPARATUS, STORAGE MEDIUM, AND ELECTRONIC DEVICE", which is hereby incorporated by reference herein.

### TECHNICAL FIELD

The present disclosure relates to the technical field of artificial intelligence, and specifically, to a pool robot control method and apparatus, a storage medium, and an electronic device.

### BACKGROUND

Currently, robots that work underwater are gradually favored by people, for example, an underwater robot configured to perform purification and disinfection, a robot configured to detect water quality, or a robot configured to clean a pool. Applications of using a pool robot to perform an operation on a pool are increasingly wide. An example in which a pool robot performs a cleaning operation is used. In a related technology, after a pool robot completes cleaning, a user generally returns the pool robot to a poolside by pulling a power cable of the pool robot, and then holds a handle provided on the pool robot to lift the pool robot out of the water, thereby completing recovery of the pool robot.

However, in the foregoing recovery process, the robot may collide with a side wall of the pool due to pulling, causing damage to the pool robot. In addition, dirt attached to the power cable further sticks to the hands of the user, leading to poor user experience. It can be learned that recovery efficiency of the pool robot in the related technology is low.

Currently, no effective solution is provided to resolve the technical problem in the related technology that the pool robot needs to be manually recovered, leading to low recovery efficiency.

### SUMMARY

The present disclosure provides a pool robot control method and apparatus, a storage medium, and an electronic device, to resolve at least a technical problem in the related technology that a pool robot needs to be manually recovered, leading to low recovery efficiency.

According to an embodiment of the present disclosure, a pool robot control method is provided. The method includes: obtaining a start position from which the pool robot executes a current task, where the current task is used for instructing the pool robot to perform an operation on a target pool, the target pool contains water, and the start position is an entering-water position or a corresponding pool bottom position when the pool robot executes the current task in a target map, the target map is a map established by identifying the target pool when or before the pool robot executes the current task, and the pool bottom position is a position on a bottom of the target pool, which corresponds to the entering-water position; and when the pool robot needs to be instructed to return during execution of the current task or after the current task is executed, controlling the pool robot to move to a target stop position in the water of the target pool, where the target stop position is a position on a side wall of the target pool, where the position on the side wall of the target pool corresponds to the start position.

In some embodiments, the controlling the pool robot to move to a target stop position in the water of the target pool includes: determining a moving path from a first position to the target stop position in the target map when the pool robot at the first position in the target pool is instructed to return; and controlling the pool robot to move from the first position to the target stop position along the moving path.

In some embodiments, the determining a moving path from a first position to the target stop position in the target map includes: determining the moving path from the first position to the target stop position in the target map when the pool robot identifies an obstacle in the water of the target pool, where the moving path bypasses the obstacle; or determining the moving path from the first position to the target stop position in the target map when the pool robot records a waypoint position in the target map, where the waypoint position is on the moving path; or determining the moving path from the first position to the target stop position in the target map according to a preset returning path determining policy when the pool robot is configured with the preset returning path determining policy.

In some embodiments, the determining the moving path from the first position to the target stop position in the target map when the pool robot records a waypoint position in the target map includes: determining the moving path from the first position to the target stop position in the target map when the pool robot records the start position, the start position is the pool bottom position, and the start position is the waypoint position, where the start position is on the moving path.

In some embodiments, the controlling the pool robot to move to a target stop position in the water of the target pool includes: when the first position is on the bottom of the target pool, the start position is the pool bottom position, and the start position is the waypoint position, controlling the pool robot to move from the first position to the pool bottom position along the bottom of the target pool; and when a second position adjacent to the pool bottom position is determined, controlling the pool robot to move from the pool bottom position to the second position and to move vertically from the second position to the target stop position along the side wall of the target pool, where the second position is a position on the side wall of the target pool, where the position on the side wall of the target pool is closest to the pool bottom position; or when the first position is on the bottom of the target pool, the start position is the pool bottom position, and the start position is the waypoint position, controlling the pool robot to move from the first position to the pool bottom position along the bottom of the target pool; controlling the pool robot to move vertically from the pool bottom position to a first water surface position, where the first water surface position is the entering-water position; and when the pool robot reaches the first water surface position, controlling the pool robot to move from the first water surface position to the target stop position.

In some embodiments, the determining the moving path from the first position to the target stop position in the target map according to a preset returning path determining policy includes: determining the moving path from the first position to the target stop position in the target map when the returning path determining policy is used for indicating that the moving path needs to pass through a target water surface position, where the target water surface position is a position on a water surface of the target pool, where the position on the water surface of the target pool corresponds to a position at which the pool robot is instructed to return, and the target water surface position is on the moving path.

In some embodiments, the controlling the pool robot to move to a target stop position in the water of the target pool includes: controlling the pool robot to move vertically from the first position to the target water surface position; and when the pool robot reaches the target water surface position, controlling the pool robot to move horizontally from the target water surface position to the target stop position.

In some embodiments, the controlling the pool robot to move to a target stop position in the water of the target pool includes: when the first position is on the bottom of the target pool, controlling the pool robot to move from the first position to a third position along the bottom of the target pool and to move vertically from the third position to a fourth position along the side wall of the target pool, where the third position is a position on the side wall of the target pool, where the position on the side wall of the target pool is closest to the first position, and the fourth position is a position on a water surface of the target pool, where the position on the water surface of the target pool corresponds to the third position; and when the pool robot reaches the fourth position, controlling the pool robot to move horizontally from the fourth position to the target stop position; or when the first position is on the side wall of the target pool, controlling the pool robot to move vertically downward to a fifth position along the side wall of the target pool, where the fifth position is a position on the bottom of the target pool, where the position on the bottom of the target pool corresponds to the first position; and when a second position adjacent to the pool bottom position is determined, controlling the pool robot to move from the fifth position to the second position and to move vertically from the second position to the target stop position along the side wall of the target pool, where the second position is a position on the side wall of the target pool, where the position on the side wall of the target pool is closest to the pool bottom position; or when the first position is on the side wall of the target pool, controlling the pool robot to move vertically upward from the first position to a sixth position along the side wall of the target pool, where the sixth position is a position on a water surface of the target pool, where the position on the water surface of the target pool corresponds to the first position; and when the pool robot reaches the sixth position, controlling the pool robot to move from the sixth position to the target stop position.

In some embodiments, the first position includes one of the following: a position at which the pool robot stays after the current task is executed; a position at which the pool robot receives a returning command during execution of the current task; and a position at which the pool robot has a battery level less than a predetermined threshold during execution of the current task.

In some embodiments, before the controlling the pool robot to move to a target stop position in the water of the target pool, the method further includes: determining the target stop position according to the target map.

In some embodiments, the determining the target stop position according to the target map includes: when the start position is the pool bottom position, determining a first adjacent position on the side wall of the target pool according to the target map, where the first adjacent position is closest to the pool bottom position, and determining a position to which the first adjacent position is vertically mapped on the water surface of the target pool as the target stop position; or when the start position is the entering-water position, determining a position to which the entering-water position is vertically mapped on the bottom of the target pool as the pool bottom position; and determining a second adjacent position on the side wall of the target pool according to the target map, where the second adjacent position is closest to the pool bottom position, and determining a position to which the second adjacent position is vertically mapped on the water surface of the target pool as the target stop position.

In some embodiments, the moving path is a shortest moving path from the first position to the target stop position in the target map.

In some embodiments, before the obtaining a start position from which the pool robot executes a current task, the method further includes: controlling, in response to a trigger instruction, an identification component of the pool robot to identify the target pool, to obtain the target map, where the identification component includes at least one of the following: a camera, a ranging sensor, or a water pressure sensor.

According to another embodiment of the present disclosure, a pool robot control apparatus is further provided. The apparatus is located in a pool robot and includes: an obtaining module configured to obtain a start position from which the pool robot executes a current task, where the current task is used for instructing the pool robot to perform an operation on a target pool, the target pool contains water, and the start position is an entering-water position or a corresponding pool bottom position when the pool robot executes the current task in a target map, the target map is a map established by identifying the target pool when or before the pool robot executes the current task, and the pool bottom position is a position on a bottom of the target pool, which corresponds to the entering-water position; and a control module configured to when the pool robot needs to be instructed to return during execution of the current task or after the current task is executed, control the pool robot to move to a target stop position in the water of the target pool, where the target stop position is a position on a side wall of the target pool, where the position on the side wall of the target pool corresponds to the start position.

According to still another embodiment of the present disclosure, a computer-readable storage medium is further provided. The computer-readable storage medium stores a computer program. The computer program is configured to perform, when being run, steps in any one of the foregoing method embodiments.

According to still another embodiment of the present disclosure, an electronic device is further provided. The electronic device includes a memory and a processor. The memory stores a computer program, and the processor is configured to run the computer program to perform steps in any one of the foregoing method embodiments.

According to the present disclosure, a start position from which the pool robot executes a current task is obtained, the pool robot identifies a target pool and establishes a target map when or before executing the current task, and the start position is an entering-water position or a corresponding pool bottom position when the pool robot executes the current task in a target map; and when the pool robot needs to be instructed to return during execution of the current task or after the current task is executed, the pool robot is controlled to move in the target pool to a target stop position, where the target stop position is a position on a side wall of the target pool, where the position on the side wall of the target pool corresponds to the start position.

### BRIEF DESCRIPTION OF THE DRAWINGS

FIG. 1 is a block diagram of a hardware structure of a mobile terminal for performing a pool robot control method according to an embodiment of the present disclosure;
FIG. 2 is a flowchart of a pool robot control method according to an embodiment of the present disclosure;
FIG. 3 is a first schematic diagram of an automatic stop path according to an embodiment of the present disclosure;
FIG. 4 is a second schematic diagram of an automatic stop path according to an embodiment of the present disclosure;
FIG. 5 is a third schematic diagram of an automatic stop path according to an embodiment of the present disclosure;
FIG. 6 is a schematic flowchart of a pool cleaning robot control method according to an embodiment of the present disclosure;
FIG. 7 is a fourth schematic diagram of an automatic stop path according to an embodiment of the present disclosure;
FIG. 8 is a fifth schematic diagram of an automatic stop path according to an embodiment of the present disclosure;
FIG. 9 is a sixth schematic diagram of an automatic stop path according to an embodiment of the present disclosure; and
FIG. 10 is a structural block diagram of a pool robot control apparatus according to an embodiment of the present disclosure.

### DETAILED DESCRIPTION

The present disclosure is further described in detail below with reference to the accompanying drawings and embodiments. It may be understood that specific embodiments described herein are merely used to explain the present disclosure, but not to limit the present disclosure. In addition, it should be noted that, for ease of description, only a part but not all of a structure related to this application is shown in the accompanying drawings.

In the descriptions of the present disclosure, unless otherwise clearly specified and defined, terms such as "interconnection", "connection", and "fixing" shall be understood in a broad sense. For example, the term "connect" may indicate a fixed connection, a detachable connection, an integral connection, a mechanical connection, an electrical connection, a direct connection, an indirect connection implemented through an intermediate medium, communication between interior structures of two components, or an interaction relationship between two components. A person of ordinary skill in the art may understand specific meanings of the terms in the present disclosure based on specific situations.

In the present disclosure, unless otherwise explicitly specified and restricted, that a first feature is "on" or "under" a second feature may include that the first feature and the second feature are in direct contact, or the first feature may be in contact with the second feature through another feature between the first feature and the second feature instead of being in direct contact with the second feature. In addition, that the first feature is "on", "above", or "over" the second feature may be that the first feature is right above or obliquely above the second feature, or may merely indicate that a horizontal height of the first feature is greater than that of the second feature. That the first feature is "below", "under", or "beneath" the second feature may be that the first feature is right below or obliquely below the second feature, or may merely indicate that a horizontal height of the first feature is less than that of the second feature.

In the descriptions of the embodiments, orientation or position relationships of the terms "upper", "lower", "left", and "right" are orientation or position relationships based on the accompanying drawings, and are used merely for ease of descriptions and brevity of operations, rather than indicating or implying that the mentioned apparatus or element needs to have a particular orientation or needs to be constructed and operated in a particular orientation. Therefore, such terms should not be construed as a limitation on the present application. In addition, the terms "first" and "second" are merely used to distinguish between the terms in description and have no special meaning.

It should be noted that in this specification, claims, and accompanying drawings of the present disclosure, the terms "first", "second", and the like are intended to distinguish between similar objects but do not necessarily indicate a specific order or sequence.

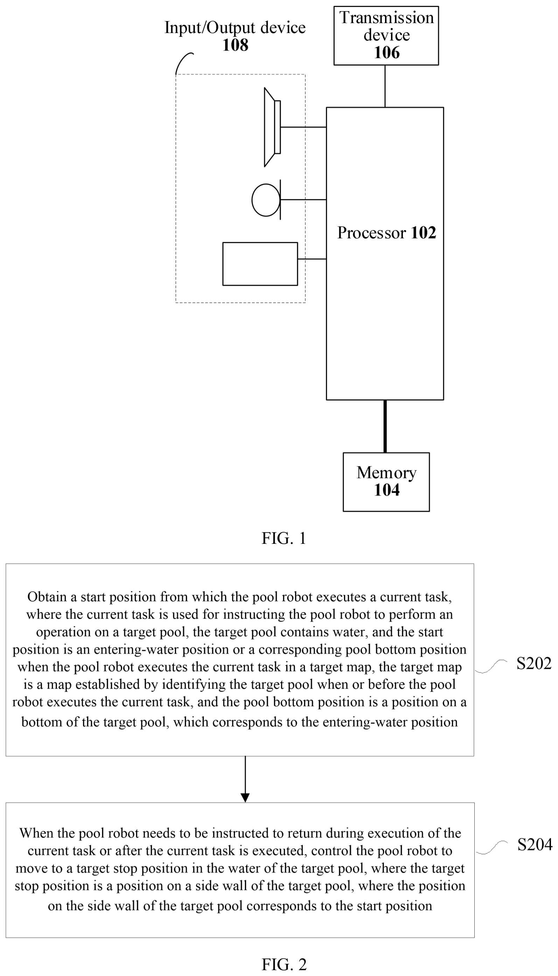

The method provided in the embodiments of the present disclosure may be performed by a mobile terminal, a computer terminal, or a similar operation apparatus. An example in which the method is performed by the mobile terminal is used. FIG. 1 is a block diagram of a hardware structure of a mobile terminal for performing a pool robot control method according to an embodiment of the present disclosure. As shown in FIG. 1, the mobile terminal may include one or more (only one is shown in FIG. 1) processors 102 (the processor 102 may include, but is not limited to, a processing apparatus such as a microprocessor unit or a field-programmable gate array FPGA) and a memory 104 configured to store data. The mobile terminal may further include a transmission device 106 with a communication function and an input/output device 108. A person of ordinary skill in the art may understand that the structure shown in FIG. 1 is merely illustrative instead of limiting the structure of the foregoing mobile terminal. For example, the mobile terminal may alternatively include more or fewer components than those shown in FIG. 1 or have a configuration different from that shown in FIG. 1.

The memory 104 may be configured to store a computer program such as a software program and a module of application software, for example, the computer program corresponding to the pool robot control method in this embodiment of the present disclosure. The processor 102 runs the computer program stored in the memory 104, to execute various functional applications and data processing, that is, to implement the foregoing method. The memory 104 may include a high-speed random memory, and may also include a non-volatile memory, for example, one or more magnetic storage apparatuses, a flash memory, or another non-volatile solid-state memory. In some embodiments, the memory 104 may further include memories remotely provided relative to the processor 102, and these remote memories may be connected to a mobile terminal through a network. Examples of the network include, but are not limited to, the Internet, an intranet, a local area network, a mobile communication network, and a combination thereof.

The transmission device 106 is configured to receive or send data through a network. Specific examples of the network may include a wireless network provided by a communication provider of the mobile terminal. In an example, the transmission device 106 includes a network interface controller (NIC), which may be connected to another network device through a base station to communicate with the Internet. In an example, the transmission device 106 may be a radio frequency (RF) module, which is configured to communicate with the Internet in a wireless manner.

In the embodiments, a pool robot control method is provided. A pool robot may be a robot that purifies and disinfects a pool, may be a robot that detects water quality, may be a pool cleaning robot that cleans a pool, or may be another robot that works in water or underwater. For example, the pool cleaning robot may clean a bottom, a side wall, or a water surface of a pool. When the pool robot completes work, has a low battery level, or needs to be instructed to return, the pool robot may be controlled to move to a predetermined stop position. FIG. 2 is a flowchart of a pool robot control method according to an embodiment of the present disclosure. As shown in FIG. 2, the method includes the following steps.

Step S202: Obtain a start position from which the pool robot executes a current task, where the current task is used for instructing the pool robot to perform an operation on a target pool, the target pool contains water, and the start position is an entering-water position or a corresponding pool bottom position when the pool robot executes the current task in a target map, the target map is a map established by identifying the target pool when or before the pool robot executes the current task, and the pool bottom position is a position on a bottom of the target pool, which corresponds to the entering-water position.

Step S204: When the pool robot needs to be instructed to return during execution of the current task or after the current task is executed, control the pool robot to move to a target stop position in the water of the target pool, where the target stop position is a position on a side wall of the target pool, where the position on the side wall of the target pool corresponds to the start position.

Through the foregoing steps, a start position from which the pool robot executes a current task is obtained, the pool robot identifies a target pool and establishes a target map when or before executing the current task, and the start position is an entering-water position or a corresponding pool bottom position when the pool robot executes the current task in a target map; and when the pool robot needs to be instructed to return during execution of the current task or after the current task is executed, the pool robot is controlled to move in the target pool to a target stop position, where the target stop position is a position on a side wall of the target pool, where the position on the side wall of the target pool corresponds to the start position. According to this embodiment, the pool robot is automatically recovered and the pool robot is controlled to move to the target stop position, thereby avoiding the problem in the related technology that recovery of the pool robot through manual pulling easily causes damage to the pool robot. Therefore, the technical problem in the related technology that the pool robot needs to be manually recovered, leading to low recovery efficiency is resolved, the recovery efficiency of the pool robot is improved, and user experience is improved.

The foregoing steps may be performed by a processor or a controller, for example, a controller or a processor of the pool robot, or an application control program of a device, or a processor having a human-computer interaction capability and provided on a storage device, or a processing device or a processing unit having a similar processing capability, or the like. However, this is not limited thereto.

In the technical solution provided in step S202, the target pool may be identified when the pool robot executes the current task or before the pool robot executes the current task, to obtain a target map of the target pool, for example, a three-dimensional space of the target pool, or planar target map information of the target pool, for example, a bottom map and/or a side wall map of the target pool, and to obtain a start position from which the pool robot executes the current task. For example, the start position may be an entering-water position or a corresponding pool bottom position when the pool robot executes the current task. Usually, the entering-water position is a position on the side wall of the target pool or near the side wall, or may be a position at a distance to the side wall. The pool bottom position may be a position on a bottom of the target pool, where the position on the bottom of the target pool corresponds to the entering-water position. For example, the pool bottom position is a position to which the entering-water position is vertically mapped on a bottom surface of the target pool. During actual application, spatial identification may be performed on the target pool by using a spatial identification component provided inside the pool robot. For example, the identification component may include an inertial navigation system (or briefly referred to as inertial navigation), may further include a ranging sensor, and may further include a water pressure sensor. The inertial navigation may be configured to position the pool robot, and the ranging sensor may be configured to measure a distance between the pool robot and a side wall of the target pool or an obstacle in the target pool. For example, the ranging sensor may be a radar sensor or an ultrasonic sensor. The ranging sensor may be configured to construct a map of the target pool, and the water pressure sensor may be configured to measure a water depth position of the pool robot in the target pool. Optionally, an automatic identification module may be further configured in the pool robot. During actual application, the pool robot may construct map information of a three-dimensional space of the target pool by using a lidar sensor or an ultrasonic sensor, another sensor, an automatic identification module, or the like configured in the pool robot. Therefore, the target pool is identified by using the identification component provided inside the pool robot, to obtain the target map.

In the technical solution provided in step S204, when the pool robot needs to be instructed to return during execution of the current task or after the current task is executed, for example, when the pool robot receives a returning command, or when the pool robot prepares to automatically return after the task is executed, the pool robot is controlled to move to the target stop position in the water in the target pool. Optionally, the pool robot may move to the target stop position along a preset returning path, or may move to the target stop position based on a position through which the pool robot passes in a process of executing the current task. Optionally, the pool robot may further perform path planning based on a current position of the pool robot, for example, to plan a shortest path for reaching the target stop position. The target stop position may be a position on a side wall of the target pool, where the position on the side wall of the target pool corresponds to the start position. For example, when the start position is the entering-water position, the target stop position may be a position on the side wall of the target pool, where the position on the side wall of the target pool is closest to the entering-water position. When the start position is a pool bottom position, the target stop position may be a position to which a position on a side wall of the target pool is vertically mapped on the water surface, where the position on the side wall of the target pool is closest to the pool bottom position. Optionally, the target stop position may alternatively be a preset position on a side wall, for example, a position on a side wall used as a fixed recovery point or recovery station. During actual application, different returning policies may be formulated to control the pool robot to move to the target stop position.

In the foregoing embodiment, a pool robot is automatically recovered, and the pool robot is controlled to move to a target stop position, thereby avoiding the problem in the related technology that recovery of a pool robot through manual pulling easily causes damage to the pool robot. Therefore, the technical problem in the related technology that the pool robot needs to be manually recovered, leading to low recovery efficiency is resolved, the recovery efficiency of the pool robot is improved, and user experience is improved.

In an optional embodiment, the controlling the pool robot to move to a target stop position in the water of the target pool includes: determining a moving path from a first position to the target stop position in the target map when the pool robot at the first position in the target pool is instructed to return; and controlling the pool robot to move from the first position to the target stop position along the moving path.

In the foregoing embodiment, the first position may be a position at which the pool robot stays after the current task is executed, or the first position may be a position at which the pool robot receives a returning command during execution of the current task, or the first position may be a position at which the pool robot has a battery level less than a predetermined threshold during execution of the current task. For example, when the battery level is less than 5% (or 10%, or another value), the pool robot gives a related prompt, for example, displays low battery level on a screen. The moving path from the first position to the target stop position is determined in the target map, and then the pool robot is controlled to move from the first position to the target stop position along the moving path. Optionally, during actual application, the pool robot may determine the foregoing moving path according to different policies. For example, the pool robot may move to the target stop position along a preset returning path. For example, the pool robot may first rise from the first position to the water surface, and then move to the target stop position along the water surface. Optionally, the pool robot may further perform path planning based on the current position (namely, the first position) and the target stop position, to plan a shortest path to the target stop position. Optionally, the pool robot may further record a bottom surface position (namely, the pool bottom position) of the target pool corresponding to the entering-water position. For example, when the start position is the pool bottom position, the pool robot first moves from the first position to the pool bottom position, then moves from the pool bottom position to a position on a closest side wall, and climbs along the side wall to the target stop position. The first position in this embodiment may be a position on a bottom surface of the target pool, a position on a side wall of the target pool, or a position on a water surface of the target pool.

In an optional embodiment, the determining a moving path from the first position to the target stop position in the target map includes: determining the moving path from the first position to the target stop position in the target map when the pool robot identifies an obstacle in the water of the target pool, where the moving path bypasses the obstacle; or determining the moving path from the first position to the target stop position in the target map when the pool robot records a waypoint position in the target map, where the waypoint position is on the moving path; or determining the moving path from the first position to the target stop position in the target map according to a preset returning path determining policy when the pool robot is configured with the preset returning path determining policy.

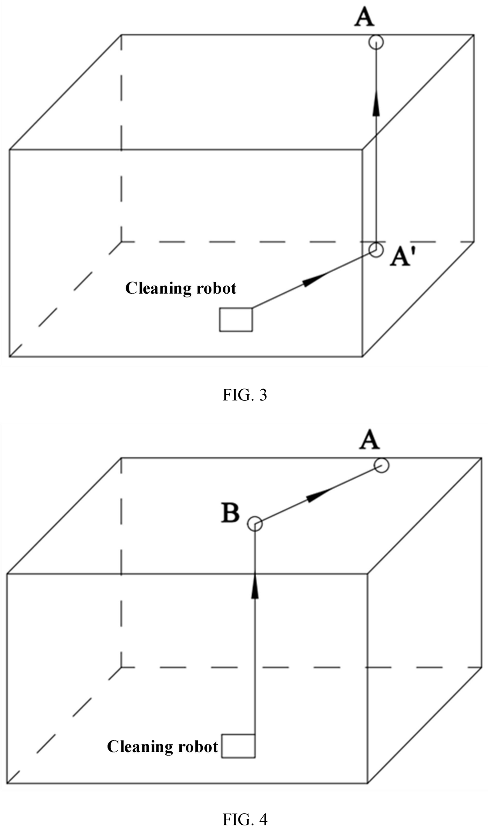

In the foregoing embodiment, the pool robot may formulate different returning policies to determine the moving path from the first position to the target stop position. For example, when the pool robot identifies an obstacle in the target pool, the moving path from the first position to the target stop position is determined in the target map, where the moving path avoids the obstacle. For example, during actual application, whether there is an obstacle around may be detected by using an ultrasonic sensor provided inside the pool robot. If there is an obstacle, a position of the obstacle may be determined in the target map, so that the obstacle may be avoided when the moving path is formulated. Alternatively, when the pool robot records a waypoint position, the waypoint position is, for example, a position at which the pool robot sinks to the bottom surface of the target pool when the pool robot just enters water, namely, a bottom surface position (for example, A') corresponding to an entering-water position (for example, A), as shown in FIG. 3. The pool robot stays at a position on the bottom surface of the target pool (which corresponds to the foregoing first position) in FIG. 3. Certainly, the waypoint position may alternatively be another position. In this way, when the moving path from the first position to the target stop position is determined, the moving path includes the foregoing waypoint position, that is, the pool robot passes through the waypoint position (for example, A') and then moves to the target stop position. Alternatively, the pool robot may determine the moving path from the first position to the entering-water position according to a preset returning path determining policy. For example, the preset returning path determining policy may be that the pool robot may first vertically rise from the current position (for example, the foregoing first position) to a water surface position, where the water surface position (for example, B in FIG. 4) may be a position on a water surface corresponding to the first position in the target map, as shown in FIG. 4, and then move from the water surface position (for example, B) to the target stop position (for example, A) along the water surface. According to this embodiment, the moving path from the first position to the target stop position is determined according to different policies, thereby enriching solutions to automatically recover the pool robot.

In an optional embodiment, the determining the moving path from the first position to the target stop position in the target map when the pool robot records a waypoint position in the target map includes: determining the moving path from the first position to the target stop position in the target map when the pool robot records the start position, the start position is the pool bottom position, and the start position is the waypoint position, where the start position is on the moving path.

In the foregoing embodiment, the waypoint position is, for example, a position at which the pool robot sinks to the bottom surface of the target pool when the pool robot just enters water, namely, a bottom surface position, for example, A' in FIG. 3 corresponding to an entering-water position (for example, A). When the moving path from the first position (namely, the position of the cleaning robot in FIG. 3) to the target stop position is determined in the target map, the moving path includes the bottom surface position (for example, A'). The target stop position may be the entering-water position A in FIG. 3, and optionally may be another position on the side wall. Optionally, if the foregoing entering-water position A is a position on a water surface at a distance to the side wall, the target stop position is a position on the side wall, where the position on the side wall is closest to the entering-water position A.

In an optional embodiment, the controlling the pool robot to move to a target stop position in the water of the target pool includes: when the first position is on the bottom of the target pool, the start position is the pool bottom position, and the start position is the waypoint position, controlling the pool robot to move from the first position to the pool bottom position along the bottom of the target pool; and when a second position adjacent to the pool bottom position is determined, controlling the pool robot to move from the pool bottom position to the second position and to move vertically from the second position to the target stop position along the side wall of the target pool, where the second position is a position on the side wall of the target pool, where the position on the side wall of the target pool is closest to the pool bottom position; or when the first position is on the bottom of the target pool, the start position is the pool bottom position, and the start position is the waypoint position, controlling the pool robot to move from the first position to the pool bottom position along the bottom of the target pool; controlling the pool robot to move vertically from the pool bottom position to a first water surface position, where the first water surface position is the entering-water position; and when the pool robot reaches the first water surface position, controlling the pool robot to move from the first water surface position to the target stop position.

In the foregoing embodiment, when the first position is on the bottom of the target pool, the start position is the pool bottom position (for example, A' in FIG. 3), and the start position is the waypoint position, as shown in FIG. 3, the pool robot may be controlled to move from the first position to the pool bottom position (for example, A' in FIG. 3) along the bottom of the target pool. When a second position closest to the pool bottom position is determined, the pool robot is then controlled to move from the pool bottom position (for example, A') to the second position and to move vertically from the second position to the target stop position along the side wall. If the pool bottom position A' is also on the side wall, the pool robot is controlled to directly move vertically from the pool bottom position A' to the target stop position.

Optionally, when the first position is on the bottom of the target pool, the start position is the pool bottom position (for example, A' in FIG. 3), and the start position is the waypoint position, as shown in FIG. 3, the pool robot may be controlled to move from the first position to the pool bottom position (for example, A' in FIG. 3) along the bottom of the target pool. Then, the pool robot is controlled to move vertically from the pool bottom position to the first water surface position (for example, A in FIG. 3). In this case, the position A may not be a position on the side wall. Then, the pool robot is controlled to move from the first water surface position to the target stop position. The target stop position may be a position on the side wall, where the position on the side wall is closest to the water surface position A.

In an optional embodiment, the determining the moving path from the first position to the target stop position in the target map according to a preset returning path determining policy includes: determining the moving path from the first position to the target stop position in the target map when the returning path determining policy is used for indicating that the moving path needs to pass through a target water surface position, where the target water surface position is a position on a water surface of the target pool, where the position on the water surface of the target pool corresponds to a position at which the pool robot is instructed to return, and the target water surface position is on the moving path.

In the foregoing embodiment, the pool robot may determine the foregoing moving path according to a returning path determining policy. The returning path determining policy may be that the pool robot needs to pass through a water surface position and then return to the target stop position. For example, the pool robot may first vertically rise from the current position (for example, the foregoing first position) to a target water surface position (for example, B in FIG. 4). When the moving path from the first position (namely, the position of the cleaning robot in FIG. 4) to the target stop position is determined in the target map, the moving path includes the target water surface position (for example, B in FIG. 4).

In an optional embodiment, the controlling the pool robot to move to a target stop position in the water of the target pool includes: controlling the pool robot to move vertically from the first position to the target water surface position; and when the pool robot reaches the target water surface position, controlling the pool robot to move horizontally from the target water surface position to the target stop position.

In the foregoing embodiment, the pool robot may be controlled to first vertically rise from the current position (for example, the foregoing first position) to a target water surface position (for example, B in FIG. 4), and then the pool robot may be controlled to move to the target stop position along the water surface, that is, move from B to A.

In an optional embodiment, the controlling the pool robot to move to a target stop position in the water of the target pool includes: when the first position is on the bottom of the target pool, controlling the pool robot to move from the first position to a third position along the bottom of the target pool and to move vertically from the third position to a fourth position along the side wall of the target pool, where the third position is a position on the side wall of the target pool, where the position on the side wall of the target pool is closest to the first position, and the fourth position is a position on a water surface of the target pool, where the position on the water surface of the target pool corresponds to the third position; and when the pool robot reaches the fourth position, controlling the pool robot to move horizontally from the fourth position to the target stop position; or when the first position is on the side wall of the target pool, controlling the pool robot to move vertically downward to a fifth position along the side wall of the target pool, where the fifth position is a position on the bottom of the target pool, where the position on the bottom of the target pool corresponds to the first position; and when a second position adjacent to the pool bottom position is determined, controlling the pool robot to move from the fifth position to the second position and to move vertically from the second position to the target stop position along the side wall of the target pool, where the second position is a position on the side wall of the target pool, where the position on the side wall of the target pool is closest to the pool bottom position; or when the first position is on the side wall of the target pool, controlling the pool robot to move vertically upward from the first position to a sixth position along the side wall of the target pool, where the sixth position is a position on a water surface of the target pool, where the position on the water surface of the target pool corresponds to the first position; and when the pool robot reaches the sixth position, controlling the pool robot to move from the sixth position to the target stop position.

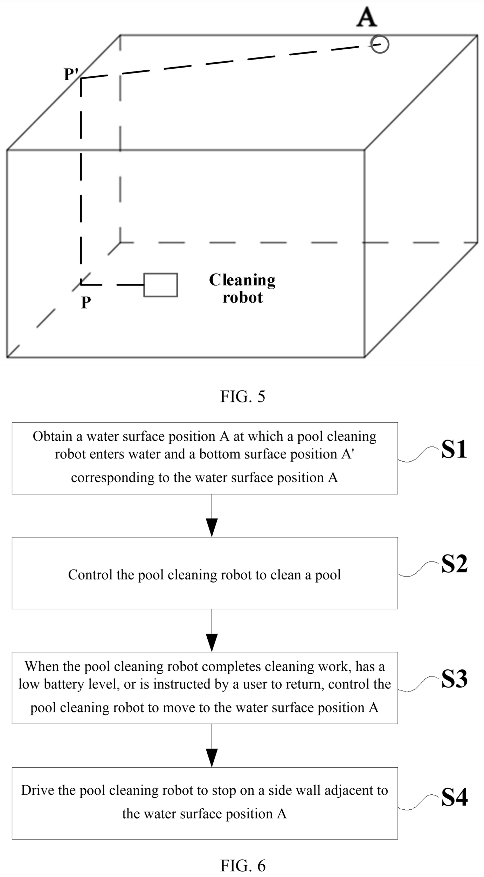

Optionally, when the first position is on the bottom of the target pool, the pool robot may be controlled to move from the first position (for example, the position of the cleaning robot in FIG. 5) to a third position along the pool bottom, where the third position is a position on the side wall of the target pool, where the position on the side wall of the target pool is closest to the first position, for example, P in FIG. 5, and then move vertically from the third position to a fourth position (for example, P' in FIG. 5) along the side wall of the target pool. Then, the pool robot is controlled to move horizontally from the fourth position to a target stop position (for example, A in FIG. 5).

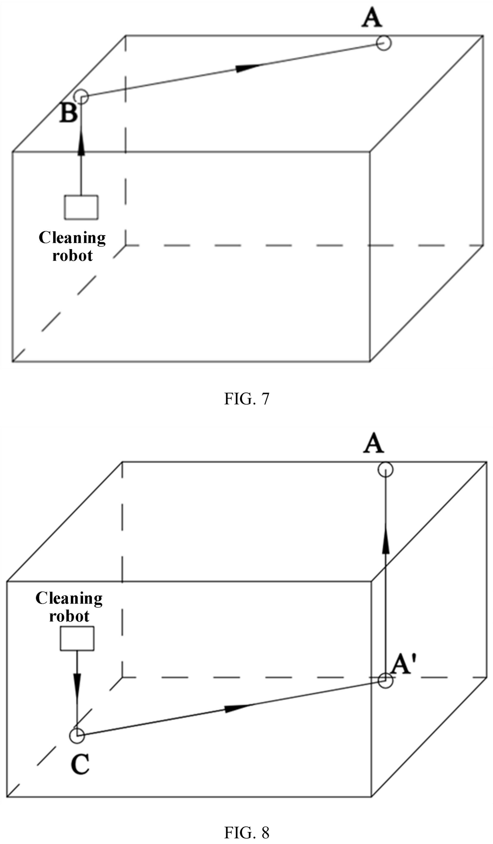

Optionally, when the first position is on the side wall of the target pool, the pool robot may be controlled to move vertically downward from the first position (for example, the position of the cleaning robot in FIG. 8) to a fifth position along the side wall of the target pool, where the fifth position is a position to which the first position is vertically mapped on the bottom of the target pool, for example, C in FIG. 8. When a second position closest to the pool bottom position (for example, A' in FIG. 8) is determined, the pool robot is controlled to move vertically from the second position to the target stop position along the side wall of the target pool. The second position may be a position on the side wall of the target pool, where the position on the side wall of the target pool is closest to the pool bottom position. The foregoing pool bottom position A' may be a position on the side wall, or may be a pool bottom position at a distance to the side wall. When the pool bottom position A' is a position on the side wall, the foregoing second position and the pool bottom position are the same position. In this case, the target stop position corresponds to A.

Optionally, when the first position is on the side wall of the target pool, the pool robot may be controlled to move vertically upward from the first position (for example, the position of the cleaning robot in FIG. 7) to a sixth position along the side wall of the target pool, where the sixth position is a position to which the first position is vertically mapped on the water surface of the target pool, for example, B in FIG. 7. Then, the pool robot is controlled to move from the sixth position to the target stop position along the water surface of the target pool. A in FIG. 7 may be a position on the side wall or may be a position on the water surface at a distance to the side wall. When A is a position on the side wall, that is, the target stop position and A are the same position, the pool robot may be controlled to directly move from B to A. If A is a position on the water surface at a distance to the side wall, a position on the side wall may be determined as the target stop position, where the position on the side wall is closest to A, and the pool robot is controlled to move from B to the target stop position.

In an optional embodiment, the first position includes one of the following: a position at which the pool robot stays after the current task is executed; a position at which the pool robot receives a returning command during execution of the current task; and a position at which the pool robot has a battery level less than a predetermined threshold during execution of the current task.

In the foregoing embodiment, the first position may be a position at which the pool robot stays after the current task is executed, or the first position may be a position at which the pool robot receives the returning command during execution of the current task. For example, when the pool robot receives, when having not executed the current task, a returning command sent by a user by using a remote control or a movement control terminal, a current position of the pool robot is used as the first position. Alternatively, the first position may be a position at which the pool robot has a battery level less than the predetermined threshold during execution of the current task. For example, when the battery level is less than 5% (or 10%, or another value), the pool robot gives a related prompt, for example, displays low battery level on a screen, and a current position of the pool robot is used as the first position.

In an optional embodiment, before the controlling the pool robot to move to a target stop position in the water of the target pool, the method further includes: determining the target stop position according to the target map.

In the foregoing embodiment, the pool robot may determine the target stop position according to the target map, and the target stop position is a position on a side wall of the target pool, where the position on the side wall of the target pool is associated with the start position. For example, when the start position is an entering-water position, a position, on a side wall of the target pool, closest to the entering-water position may be determined as the target stop position according to the target map. When the start position is the pool bottom position, a position, on the side wall of the target pool, closest to the pool bottom position may be determined according to the target map, and a position to which the closest position is vertically mapped on the water surface of the target pool may be determined as the target stop position.

In an optional embodiment, the determining the target stop position according to the target map includes: when the start position is the pool bottom position, determining a first adjacent position on the side wall of the target pool according to the target map, where the first adjacent position is closest to the pool bottom position, and determining a position to which the first adjacent position is vertically mapped on the water surface of the target pool as the target stop position; or when the start position is the entering-water position, determining a position to which the entering-water position is vertically mapped on the bottom of the target pool as the pool bottom position; and determining a second adjacent position on the side wall of the target pool according to the target map, where the second adjacent position is closest to the pool bottom position, and determining a position to which the second adjacent position is vertically mapped on the water surface of the target pool as the target stop position.

Optionally, when the start position is the pool bottom position, the pool robot may determine a first adjacent position on the side wall of the target pool according to the target map, where the first adjacent position is closest to the pool bottom position, where the first adjacent position may be a position of a junction of the bottom surface and the side wall of the target pool, and then determine a position to which the first adjacent position is vertically mapped on the water surface of the target pool as the target stop position.

Optionally, when the start position is an entering-water position, the pool robot may determine a position on a side wall of the target pool as the target stop position according to the target map, where the position on the side wall of the target pool is closest to the entering-water position; or first determine a position to which the entering-water position is vertically mapped on the bottom surface of the target pool as the pool bottom position, then determine a second adjacent position on the side wall of the target pool according to the target map, where the second adjacent position is closest to the pool bottom position, and then determine a position to which the second adjacent position is vertically mapped on the water surface of the target pool as the target stop position. The foregoing target map may include a bottom surface map and/or a side wall map of the target pool. Optionally, the foregoing target map may be a three-dimensional space of the target pool.

In an optional embodiment, the moving path is a shortest moving path from the first position to the target stop position in the target map.

In the foregoing embodiment, when determining the moving path according to a position corresponding to the first position and a position corresponding to the target stop position in the target map, the pool robot optionally formulates a shortest moving path. During actual application, the target pool may be identified by using an identification component of the pool robot, to obtain a target map of the target pool, for example, a three-dimensional space of the target pool or planar target map information of the target pool, for example, a bottom map and/or a side wall map of the target pool. In this way, the shortest moving path from the first position to the target stop position may be determined according to the target map of the target pool, and if it is determined that there is an obstacle, the obstacle may be further avoided.

In an optional embodiment, before the obtaining a start position from which the pool robot executes a current task, the method further includes: controlling, in response to a trigger instruction, an identification component of the pool robot to identify the target pool, to obtain the target map, where the identification component includes at least one of the following: a camera, a ranging sensor, or a water pressure sensor.

In the foregoing embodiment, when the pool robot receives a trigger instruction when the pool robot executes the current task or before the pool robot executes the current task, in response to the trigger instruction, an identification component of the pool robot is controlled to identify the target pool, to obtain the target map. For example, the identification component may include an inertial navigation system (or briefly referred to as inertial navigation), may further include a ranging sensor, and may further include a water pressure sensor. The inertial navigation may be configured to position the pool robot, and the ranging sensor may be configured to measure a distance between the pool robot and a side wall of the target pool or an obstacle in the target pool. For example, the ranging sensor may be a radar sensor or an ultrasonic sensor. The ranging sensor may be configured to construct a map of the target pool, and the water pressure sensor may be configured to measure a water depth position of the pool robot in the target pool. Optionally, an automatic identification module may be further configured in the pool robot. Optionally, spatial identification may be performed on the target pool by using the identification component provided inside the pool robot, to obtain a three-dimensional space, so that the map of the target pool can be obtained. During actual application, the pool robot may construct map information of the three-dimensional space of the target pool by using a lidar sensor or an ultrasonic sensor, another sensor, an automatic identification module, or the like provided inside the pool robot. Optionally, a 3D map of the target pool may be obtained, or a bottom surface (or bottom) map and a side wall map of the target pool may be separately obtained.

It is clear that the embodiments described above are merely some but not all of embodiments of the present disclosure. The present disclosure is specifically described below with reference to embodiments.

An embodiment of the present disclosure provides a pool cleaning robot configured to clean a pool. The pool cleaning robot includes a moving module, a working module, a control module, a storage module, and a map planning module. The map planning module is communicatively connected to the control module and the storage module. The moving module is configured to drive the pool cleaning robot to move on a working surface. The working module is configured to implement each piece of work content executed by the pool cleaning robot. The map planning module is configured to obtain a map of a working pool of the pool cleaning robot, so that the map planning module can properly plan a working path, and the map is stored in the storage module. The control module is configured to control work content of the pool cleaning robot. The pool cleaning robot is configured to implement steps in any one of the foregoing method embodiments.

When the pool cleaning robot works in a pool, the following steps are performed: The pool cleaning robot records a bottom map of the pool and stores the bottom map, and then the map planning module plans a working path according to the bottom map. According to the method, working efficiency of the pool cleaning robot can be improved, and fault occurrence can be avoided. In addition, a user can also learn a working condition of the pool cleaning robot at any time based on the working path.

In addition, if the pool cleaning robot can clean a side wall of a pool, when the robot works in the pool, the following steps are performed: The pool cleaning robot records a bottom map of the pool, then records a side wall map of the pool, and stores the bottom map and the side wall map, and then the map planning module plans a working path according to the bottom map and the side wall map. According to the method, working efficiency of the pool cleaning robot can be improved, and fault occurrence can be avoided.

If the pool cleaning robot can clean only a side wall of a pool, when the robot works in the pool, the following steps are performed: The pool cleaning robot records a side wall map of the pool and stores the side wall map, and then the map planning module plans a working path according to the side wall map. The effect thereof is the same as that described above, and details are not described herein again.

The embodiments provide a pool cleaning robot control method. FIG. 6 is a schematic flowchart of a pool cleaning robot control method according to an embodiment of the present disclosure. The method includes the following steps.

S1: A pool cleaning robot falls from a water surface position A (corresponding to the foregoing entering-water position) at which the pool cleaning robot enters water to a bottom surface position A' (corresponding to the foregoing bottom surface position) corresponding to the water surface position A, and the pool cleaning robot is positioned and records the bottom surface position A'. In this step, the water surface position A at which the pool cleaning robot enters the water and the bottom surface position A' corresponding to the water surface position A are obtained.

S2: Control the pool cleaning robot to clean a pool.

S3: Control, under a preset condition, the pool cleaning robot to move to the water surface position A. In this step, when the pool cleaning robot completes cleaning work, has a low battery level, or is instructed by a user to return, the pool cleaning robot is controlled to move to the water surface position A.

S4: Control the pool cleaning robot to move and stop on a side wall of the pool adjacent to the water surface position A, to wait to be recovered by the user. In this step, the pool cleaning robot is driven to stop on the side wall of the pool adjacent to the water surface position A.

According to the pool cleaning robot control method, the pool cleaning robot automatically returns to an entering-water position, thereby effectively avoiding a problem that the user pulls a power cable to recover the pool cleaning robot, easily causing damage to the cleaning robot. In this way, the user can conveniently recover the pool cleaning robot. This helps shorten an automatic stop time of the pool cleaning robot, improve recovery efficiency, and improve user experience.

Because the pool cleaning robot may have one or more cleaning manners such as water bottom cleaning, side wall cleaning, and water surface cleaning, details of the step of returning to the water surface position A by the pool cleaning robot are different for different cleaning manners.

It may be understood that because the pool cleaning robot has a path planning function, a position of the pool cleaning robot at the bottom existing when the pool cleaning robot completes work and the bottom surface position A' are the same position. In this case, the pool cleaning robot can reach the water surface position A after floating to the water surface. However, if there is a specific distance between a position of the pool cleaning robot existing when the pool cleaning robot completes work and the bottom position A', or the pool cleaning robot has not completed work and needs to be charged, the pool cleaning robot returns to the water surface position A. In this case, path planning of the pool cleaning robot is described as follows.

Execution of step S3 is separately described below for different situations of a position (for example, on a bottom surface or a side wall of a pool) at which the pool cleaning robot stays before recovery.

Referring to FIG. 3, FIG. 3 is a first schematic diagram of an automatic stop path according to an embodiment of the present disclosure. If the position at which the pool cleaning robot stays before recovery is at the bottom of the pool, the foregoing step S3 includes the following steps.

S31: When the pool cleaning robot completes cleaning work, has a low battery level, or is instructed by a user to return, control the pool cleaning robot to move to the bottom surface position A'.

S32: Control the pool cleaning robot to climb upward from the bottom surface position A' to the water surface position A.

According to the foregoing method, the pool cleaning robot can automatically stop along a shortest path. This helps improve returning efficiency and implement an energy conservation effect. In addition, because some pool cleaning robots can clean only a pool bottom, the foregoing method is applicable to pool cleaning robots having different functions, thereby expanding the application scope of the method.

In addition, because the pool cleaning robot has a path planning function, if the pool cleaning robot returns to the water surface position A after completing entire work for the pool bottom, the bottom surface position A' is generally close to an end point at which the pool cleaning robot completes cleaning work, so that the pool cleaning robot can quickly move to the bottom surface position A'.

More specifically, a method for the pool cleaning robot to move to the bottom surface position A' may be as follows: A distance sensor is provided on the pool cleaning robot; the distance sensor detects a shortest path of the pool cleaning robot to the bottom surface position A'; and then the pool cleaning robot moves to the bottom surface position A' along the shortest path. The method can further optimize a path in which the pool cleaning robot returns to the water surface position A, thereby further improving returning efficiency of the pool cleaning robot and saving electric energy.

More specifically, a method for the pool cleaning robot to climb upward from the bottom surface position A' to the water surface position A may be increasing a buoyancy force applied to the pool cleaning robot or increasing an upward driving force applied to the pool cleaning robot, where the upward driving force is oriented to the water surface, so that the pool cleaning robot directly climbs upward from the bottom surface position A' to the water surface position A.

Optionally, when the position at which the pool cleaning robot stays before recovery is at the bottom of the pool, the foregoing step S3 may be performed according to the following steps.

S31: When the pool cleaning robot completes cleaning work, has a low battery level, or is instructed by a user to return, control the pool cleaning robot to rise to a water surface position, such as a water surface position B (corresponding to the foregoing water surface position) in FIG. 4.

S32: Control the pool cleaning robot to move from the water surface position B to the water surface position A.

In addition, in the foregoing step S2, if cleaning work of the pool cleaning robot is to clean the bottom and the side wall of the pool, the pool cleaning robot may first clean the bottom and then clean the side wall, so that a shortest working path of the pool cleaning robot can be planned. This improves cleaning efficiency.

For the foregoing pool cleaning robot, the user may choose to clean only the bottom, clean only the side wall, or clean both the bottom and the side wall. If the user chooses to clean the bottom, an automatic stop path is the same as that described above. If the user chooses to clean only the side wall or chooses to clean both the bottom and the side wall, refer to FIG. 7. In this case, if the position at which the pool cleaning robot stays before recovery is at the side wall of the pool, the foregoing step S3 may include the following steps.

S31: When the pool cleaning robot completes cleaning work, has a low battery level, or is instructed by a user to return, control the pool cleaning robot to climb up along a pool wall to a water surface position B corresponding to the position at which the pool cleaning robot stays before recovery.

S32: Control the pool cleaning robot to obtain a shortest path from the water surface position B to the water surface position A.

S33: Control the pool cleaning robot to move from the water surface position B to the water surface position A along the shortest path.

The method helps optimize a returning path of the pool cleaning robot, improve returning efficiency of the pool cleaning robot as much as possible, reduce a waiting time of the user, and improve user experience.

Optionally, when the position at which the pool cleaning robot stays before recovery is at the side wall of the pool, the foregoing step S3 may be further performed according to the following steps.

S31: When the pool cleaning robot completes cleaning work, has a low battery level, or is instructed by a user to return, control the pool cleaning robot to move downward along a pool wall to a bottom surface position C corresponding to the position at which the pool cleaning robot stays before recovery, as shown in FIG. 8.

S32: Control the pool cleaning robot to obtain a shortest path from the bottom surface position C to the bottom surface position A' and to move to the bottom surface position A' along the shortest path on a pool bottom surface.

S33: Control the pool cleaning robot to climb upward from the bottom surface position A' to the water surface position A along a pool wall.

Optionally, in step S2, if cleaning work of the pool cleaning robot is to clean a bottom, a side wall, and a water surface of the pool, cleaning steps of the pool cleaning robot may be: The pool cleaning robot first cleans the bottom, then cleans the side wall, and finally cleans the water surface. Along such a working path, the pool cleaning robot is located on the water surface after completing work. This helps reduce a time taken by the pool cleaning robot to return to the water surface position A.

For the foregoing pool cleaning robot, the user may choose to clean only two or three of the bottom, the side wall, and the water surface of the pool. If the user chooses to clean the bottom, clean the side wall, or clean the bottom and the side wall, an automatic stop path is the same as that described above.

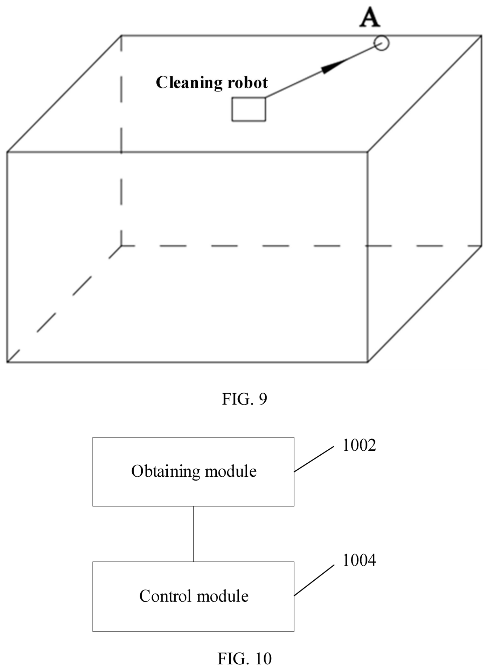

When the user chooses to clean the water surface, the bottom and the water surface, the side wall and the water surface, or all the three, as shown in FIG. 9, in step S2, the pool cleaning robot may be located on the water surface of the pool when cleaning is completed. In this case, step S3 may include the following steps.

S31: The pool cleaning robot obtains a shortest path from a position of the pool cleaning robot to the water surface position A after cleaning is completed.

S32: Control the pool cleaning robot to move to the water surface position A along the shortest path.

To sum up, the pool cleaning robot control method in this embodiment can be applied to a pool cleaning robot in any cleaning form. This helps ensure the application scope of the pool cleaning robot control method.

It may be understood that the pool cleaning robot may return to the water surface position A when the pool cleaning robot has a low battery level and needs to return to a station for charging. In this case, after finding out that the battery level is low, the pool cleaning robot performs step S3 and step S4.

It should be noted that the basic principles and main features of the present disclosure and advantages of the present disclosure are shown and described above. A person skilled in the art should understand that the present disclosure is not limited by the embodiments described above. The embodiments described above and this specification only describe the principles of the present disclosure, and various changes and modifications may be made to the present disclosure without departing from the spirit and scope of the present disclosure. These changes and modifications shall all fall within the protection scope claimed in the present disclosure. The protection scope claimed in the present disclosure is defined by the attached claims and equivalents thereof.

According to the descriptions in the foregoing implementations, a person skilled in the art may clearly learn that the method according to the foregoing embodiments may be implemented by software and a necessary universal hardware platform or by hardware only. In many cases, the former is a preferred implementation. Based on such an understanding, the technical solutions of the present disclosure essentially or the part contributing to the related technology may be implemented in a form of a software product. The computer software product is stored in a storage medium (for example, a ROM/RAM, a magnetic disk, or an optical disc) and includes several instructions for instructing a terminal device (which may be a mobile phone, a computer, a server, a network device, or the like) to perform the methods described in the embodiments of the present disclosure.

In the embodiments, a pool robot control apparatus is further provided. The apparatus is located in the pool robot. FIG. 10 is a structural block diagram of a pool robot control apparatus according to an embodiment of the present disclosure. As shown in FIG. 10, the apparatus includes: an obtaining module 1002 configured to obtain a start position from which the pool robot executes a current task, where the current task is used for instructing the pool robot to perform an operation on a target pool, the target pool contains water, and the start position is an entering-water position or a corresponding pool bottom position when the pool robot executes the current task in a target map, the target map is a map established by identifying the target pool when or before the pool robot executes the current task, and the pool bottom position is a position on a bottom of the target pool, which corresponds to the entering-water position; and a control module 1004 configured to when the pool robot needs to be instructed to return during execution of the current task or after the current task is executed, control the pool robot to move to a target stop position in the water of the target pool, where the target stop position is a position on a side wall of the target pool, where the position on the side wall of the target pool corresponds to the start position.

In an optional embodiment, the control module 1004 includes: a first determining sub-module configured to determine a moving path from the first position to the target stop position in the target map when the pool robot at a first position in the target pool is instructed to return; and a first control sub-module configured to control the pool robot to move from the first position to the target stop position along the moving path.

In an optional embodiment, the first determining sub-module includes: a first determining unit configured to determine the moving path from the first position to the target stop position in the target map when the pool robot identifies an obstacle in the water of the target pool, where the moving path bypasses the obstacle; or a second determining unit configured to determine the moving path from the first position to the target stop position in the target map when the pool robot records a waypoint position in the target map, where the waypoint position is on the moving path; or a third determining unit configured to determine the moving path from the first position to the target stop position in the target map according to a preset returning path determining policy when the pool robot is configured with the preset returning path determining policy.

In an optional embodiment, the second determining unit includes: a first determining sub-unit configured to determine the moving path from the first position to the target stop position in the target map when the pool robot records the start position, the start position is the pool bottom position, and the start position is the waypoint position, where the start position is on the moving path.

In an optional embodiment, the control module 1004 further includes: a second control sub-module configured to when the first position is on the bottom of the target pool, the start position is the pool bottom position, and the start position is the waypoint position, control the pool robot to move from the first position to the pool bottom position along the bottom of the target pool; and a third control sub-module configured to when a second position adjacent to the pool bottom position is determined, control the pool robot to move from the pool bottom position to the second position and to move vertically from the second position to the target stop position along the side wall of the target pool, where the second position is a position on the side wall of the target pool, where the position on the side wall of the target pool is closest to the pool bottom position; or a fourth control sub-module configured to when the first position is on the bottom of the target pool, the start position is the pool bottom position, and the start position is the waypoint position, control the pool robot to move from the first position to the pool bottom position along the bottom of the target pool; a fifth control sub-module configured to control the pool robot to move vertically from the pool bottom position to a first water surface position, where the first water surface position is the entering-water position; and a sixth control sub-module configured to when the pool robot reaches the first water surface position, control the pool robot to move from the first water surface position to the target stop position.

In an optional embodiment, the third determining unit includes: a second determining sub-unit configured to determine the moving path from the first position to the target stop position in the target map when the returning path determining policy is used for indicating that the moving path needs to pass through a target water surface position, where the target water surface position is a position on a water surface of the target pool, where the position on the water surface of the target pool corresponds to a position at which the pool robot is instructed to return, and the target water surface position is on the moving path.

In an optional embodiment, the control module 1004 further includes: a seventh control sub-module configured to control the pool robot to move vertically from the first position to the target water surface position; and an eighth control sub-module configured to when the pool robot reaches the target water surface position, control the pool robot to move horizontally from the target water surface position to the target stop position.

In an optional embodiment, the control module 1004 includes: a ninth control sub-module configured to when the first position is on the bottom of the target pool, control the pool robot to move from the first position to a third position along the bottom of the target pool and to move vertically from the third position to a fourth position along the side wall of the target pool, where the third position is a position on the side wall of the target pool, where the position on the side wall of the target pool is closest to the first position, and the fourth position is a position on a water surface of the target pool, where the position on the water surface of the target pool corresponds to the third position; and a tenth control sub-module configured to when the pool robot reaches the fourth position, control the pool robot to move horizontally from the fourth position to the target stop position; or an eleventh control sub-module configured to when the first position is on the side wall of the target pool, control the pool robot to move vertically downward to a fifth position along the side wall of the target pool, where the fifth position is a position on the bottom of the target pool, where the position on the bottom of the target pool corresponds to the first position; and a twelfth control sub-module configured to when a second position adjacent to the pool bottom position is determined, control the pool robot to move from the fifth position to the second position and to move vertically from the second position to the target stop position along the side wall of the target pool, where the second position is a position on the side wall of the target pool, where the position on the side wall of the target pool is closest to the pool bottom position; or a thirteenth control sub-module configured to when the first position is on the side wall of the target pool, control the pool robot to move vertically upward from the first position to a sixth position along the side wall of the target pool, where the sixth position is a position on a water surface of the target pool, where the position on the water surface of the target pool corresponds to the first position; and a fourteenth control sub-module configured to when the pool robot reaches the sixth position, control the pool robot to move from the sixth position to the target stop position.

In an optional embodiment, the first position includes one of the following: a position at which the pool robot stays after the current task is executed; a position at which the pool robot receives a returning command during execution of the current task; and a position at which the pool robot has a battery level less than a predetermined threshold during execution of the current task.

In an optional embodiment, the foregoing apparatus further includes: a determining module configured to before the pool robot is controlled to move to the target stop position in the water of the target pool, determine the target stop position according to the target map.

In an optional embodiment, the determining module includes: a second determining sub-module configured to when the start position is the pool bottom position, determine a first adjacent position on the side wall of the target pool according to the target map, where the first adjacent position is closest to the pool bottom position, and determine a position to which the first adjacent position is vertically mapped on the water surface of the target pool as the target stop position; or a third determining sub-module configured to when the start position is the entering-water position, determine a position to which the entering-water position is vertically mapped on the bottom of the target pool as the pool bottom position, and a fourth determining sub-module configured to determine a second adjacent position on the side wall of the target pool according to the target map, where the second adjacent position is closest to the pool bottom position, and determine a position to which the second adjacent position is vertically mapped on the water surface of the target pool as the target stop position.

In an optional embodiment, the moving path is a shortest moving path from the first position to the target stop position in the target map.

In an optional embodiment, the foregoing apparatus further includes: a processing module configured to before the start position from which the pool robot executes the current task is obtained, control, in response to a trigger instruction, an identification component of the pool robot to identify the target pool, to obtain the target map, where the identification component includes at least one of the following: a camera, a ranging sensor, or a water pressure sensor.

It should be noted that the foregoing modules may be implemented by software or hardware, and the latter may be implemented in the following manner: The foregoing modules are all located in a same processor; or the foregoing modules are respectively located in different processors in any combination form. However, this is not limited thereto.

An embodiment of the present disclosure further provides a computer-readable storage medium. The computer-readable storage medium stores a computer program. The computer program is configured to perform, when being run, steps in any one of the foregoing method embodiments.

In some embodiments, the computer-readable storage medium may include, but is not limited to, various media capable of storing computer programs, such as a USB flash drive, a read-only memory (ROM), a random access memory (RAM), a mobile hard disk, a magnetic disk, or an optical disc.

An embodiment of the present disclosure further provides an electronic device. The electronic device includes a memory and a processor. The memory stores a computer program, and the processor is configured to run the computer program to perform steps in any one of the foregoing method embodiments.

In some embodiments, the foregoing electronic device may further include a transmission device and an input/output device. The transmission device is connected to the foregoing processor, and the input/output device is connected to the foregoing processor.

For a specific example in this embodiment, refer to the examples described in the foregoing embodiments and example implementations. Details are not described herein again in this embodiment.

It is clear that a person skilled in the art should understand that the various modules or steps in the present disclosure may be implemented by general-purpose computing apparatuses. The modules or steps may be integrated on a single computing apparatus or distributed on a network formed by a plurality of computing apparatuses. The modules or steps may be implemented by program codes executable by computing apparatuses, so that the modules or steps can be stored in storage apparatuses for execution by the computing apparatuses. Moreover, the illustrated or described steps may be executed in a sequence different from the above order in some circumstances. Alternatively, the modules or steps can be respectively made into integrated circuit modules, or the modules or steps can be implemented by making a plurality of modules or steps thereof into a single integrated circuit module. In this way, the present disclosure is not limited to any specific combination of hardware and software.

The foregoing descriptions are merely preferred embodiments of the present disclosure, and are not intended to limit the present disclosure. A person skilled in the art may make various modifications and changes to the present disclosure. Any modification, equivalent replacement, or improvement made within the principle of the present disclosure shall fall within the protection scope of the present disclosure.

## Claims

1. A pool robot control method, comprising:
obtaining a start position from which the pool robot executes a current task, wherein the current task is used for instructing the pool robot to perform an operation on a target pool, the target pool contains water, and the start position is an entering-water position or a corresponding pool bottom position when the pool robot executes the current task in a target map, the target map is a map established by identifying the target pool when or before the pool robot executes the current task, and the pool bottom position is a position on a bottom of the target pool, which corresponds to the entering-water position; and
when the pool robot is instructed to return during execution of the current task or after the current task is executed, controlling the pool robot to move to a target stop position in the water of the target pool, wherein the target stop position is a position on a side wall of the target pool, wherein the position on the side wall of the target pool corresponds to the start position.

2. The method according to claim 1, wherein the controlling the pool robot to move to a target stop position in the water of the target pool comprises:
determining a moving path from a first position to the target stop position in the target map when the pool robot at the first position in the target pool is instructed to return; and
controlling the pool robot to move from the first position to the target stop position along the moving path.

3. The method according to claim 2, wherein the determining a moving path from a first position to the target stop position in the target map comprises:
determining the moving path from the first position to the target stop position in the target map when the pool robot identifies an obstacle in the water of the target pool, wherein the moving path bypasses the obstacle; or
determining the moving path from the first position to the target stop position in the target map when the pool robot records a waypoint position in the target map, wherein the waypoint position is on the moving path; or
determining the moving path from the first position to the target stop position in the target map according to a preset returning path determining policy when the pool robot is configured with the preset returning path determining policy.

4. The method according to claim 3, wherein the determining the moving path from the first position to the target stop position in the target map when the pool robot records a waypoint position in the target map comprises:
determining the moving path from the first position to the target stop position in the target map when the pool robot records the start position, the start position is the pool bottom position, and the start position is the waypoint position, wherein the start position is on the moving path.

5. The method according to claim 4, wherein the controlling the pool robot to move to a target stop position in the water of the target pool comprises:
when the first position is on the bottom of the target pool, the start position is the pool bottom position, and the start position is the waypoint position, controlling the pool robot to move from the first position to the pool bottom position along the bottom of the target pool; and when a second position adjacent to the pool bottom position is determined, controlling the pool robot to move from the pool bottom position to the second position and to move vertically from the second position to the target stop position along the side wall of the target pool, wherein the second position is a position on the side wall of the target pool, wherein the position on the side wall of the target pool is closest to the pool bottom position; or
when the first position is on the bottom of the target pool, the start position is the pool bottom position, and the start position is the waypoint position, controlling the pool robot to move from the first position to the pool bottom position along the bottom of the target pool; controlling the pool robot to move vertically from the pool bottom position to a first water surface position, wherein the first water surface position is the entering-water position; and when the pool robot reaches the first water surface position, controlling the pool robot to move from the first water surface position to the target stop position.

6. The method according to claim 3, wherein the determining the moving path from the first position to the target stop position in the target map according to a preset returning path determining policy comprises:
determining the moving path from the first position to the target stop position in the target map when the returning path determining policy is used for indicating that the moving path needs to pass through a target water surface position, wherein the target water surface position is a position on a water surface of the target pool, wherein the position on the water surface of the target pool corresponds to a position at which the pool robot is instructed to return, and the target water surface position is on the moving path.

7. The method according to claim 6, wherein the controlling the pool robot to move to a target stop position in the water of the target pool comprises:
controlling the pool robot to move vertically from the first position to the target water surface position; and
when the pool robot reaches the target water surface position, controlling the pool robot to move horizontally from the target water surface position to the target stop position.

8. The method according to claim 2, wherein the controlling the pool robot to move to a target stop position in the water of the target pool comprises:
when the first position is on the bottom of the target pool, controlling the pool robot to move from the first position to a third position along the bottom of the target pool and to move vertically from the third position to a fourth position along the side wall of the target pool, wherein the third position is a position on the side wall of the target pool, wherein the position on the side wall of the target pool is closest to the first position, and the fourth position is a position on a water surface of the target pool, wherein the position on the water surface of the target pool corresponds to the third position; and when the pool robot reaches the fourth position, controlling the pool robot to move horizontally from the fourth position to the target stop position; or
when the first position is on the side wall of the target pool, controlling the pool robot to move vertically downward to a fifth position along the side wall of the target pool, wherein the fifth position is a position on the bottom of the target pool, wherein the position on the bottom of the target pool corresponds to the first position; and when a second position adjacent to the pool bottom position is determined, controlling the pool robot to move from the fifth position to the second position and to move vertically from the second position to the target stop position along the side wall of the target pool, wherein the second position is a position on the side wall of the target pool, wherein the position on the side wall of the target pool is closest to the pool bottom position; or
when the first position is on the side wall of the target pool, controlling the pool robot to move vertically upward from the first position to a sixth position along the side wall of the target pool, wherein the sixth position is a position on a water surface of the target pool, wherein the position on the water surface of the target pool corresponds to the first position; and when the pool robot reaches the sixth position, controlling the pool robot to move from the sixth position to the target stop position.

9. The method according to any one of claims 2 to 8, wherein the first position comprises one of the following:
a position at which the pool robot stays after the current task is executed;
a position at which the pool robot receives a returning command during execution of the current task; and
a position at which the pool robot has a battery level less than a predetermined threshold during execution of the current task.

10. The method according to any one of claims 1 to 8, wherein before the controlling the pool robot to move to a target stop position in the water of the target pool, the method further comprises:
determining the target stop position according to the target map.

11. The method according to claim 10, wherein the determining the target stop position according to the target map comprises:
when the start position is the pool bottom position, determining a first adjacent position on the side wall of the target pool according to the target map, wherein the first adjacent position is closest to the pool bottom position, and determining a position to which the first adjacent position is vertically mapped on the water surface of the target pool as the target stop position; or
when the start position is the entering-water position, determining a position to which the entering-water position is vertically mapped on the bottom of the target pool as the pool bottom position; and determining a second adjacent position on the side wall of the target pool according to the target map, wherein the second adjacent position is closest to the pool bottom position, and determining a position to which the second adjacent position is vertically mapped on the water surface of the target pool as the target stop position.

12. The method according to any one of claims 2 to 8, wherein the moving path is a shortest moving path from the first position to the target stop position in the target map.

13. The method according to any one of claims 1 to 8, wherein before the obtaining a start position from which the pool robot executes a current task, the method further comprises:
controlling, in response to a trigger instruction, an identification component of the pool robot to identify the target pool, to obtain the target map, wherein the identification component comprises at least one of the following: a camera, a ranging sensor, or a water pressure sensor.

14. A pool robot control apparatus, located in a pool robot, and comprising:
an obtaining module configured to obtain a start position of the pool robot existing when the pool robot executes a current task, wherein the current task is used for instructing the pool robot to perform an operation on a target pool, the target pool contains water, and the start position is a water entering position or a pool bottom position of the pool robot in a target map, wherein the water entering position or the pool bottom position of the pool robot exists when the pool robot executes the current task, the target map is a map established by identifying the target pool when or before the pool robot executes the current task, and the pool bottom position is a position on a bottom of the target pool, wherein the position on the bottom of the target pool corresponds to the water entering position; and
a control module configured to when the pool robot needs to be recalled during execution of the current task or after the current task is executed, control the pool robot to move to a target stop position in the water of the target pool, wherein the target stop position is a position on a side wall of the target pool, wherein the position on the side wall of the target pool corresponds to the start position.

15. A computer-readable storage medium, wherein the computer-readable storage medium stores a computer program, wherein when the computer program is executed by a processor, steps of the method according to any one of claims 1 to 13 are implemented.

16. An electronic device, comprising a memory, a processor, and a computer program stored on the memory and executable by the processor, wherein the processor, when executing the computer program, implements steps of the method according to any one of claims 1 to 13.
